# EUROPEAN PATENT APPLICATION

(11) **EP 2 065 843 A1**
(43) Date of publication of application: **03.06.2009**
(21) Application number: 07291435.1
(22) Date of filing: 30.11.2007
(51) Int. Cl.: G06Q 10/00

(54) **Process for establishing a social network with an adapted network architecture comprising a reasoning server**

(71) Applicant: Alcatel Lucent, 75008 Paris (FR)
(72) Inventor: Skraba, Ryan, 75014 Paris (FR); Vitale, Antonio, 75013 Paris (FR)
(74) Representative: Sayettat, Julien Christian

(57) **Abstract**

The invention relates to a process for establishing a social network between users, wherein nodes represent users and ties linking said nodes representing relationships between said users, characterised in that information are associated to at least one tie in order to qualify the relationship between users represented by nodes linked by said tie.

## Description

The invention relates to a process for establishing a social network between users, wherein people and their relationships are respectively represented by nodes and ties, as well as an architecture allowing establishing such a network, and a reasoning server for determining the optimal path between two nodes.

With the development of communication means via the internet, people have a far greater range of communication services to apply to a far larger set of contacts. A user grows his contact list by finding new friends or business contacts with common interests and goals, meeting new people through a contact network is a good way to achieve this. To answer this demand more and more networks such as Facebook, Linkedin or Microsoft Office SharePoint Server (MOSS) propose matching people that have contacts in common.

Facebook defines itself as "a social utility that connects you with people around you". It offers by default a flat list of friends connected with a specific user. Facebook recently launched an Application Programming Interface (API) that allows the development of applications to be used on the site, known as the Facebook Platform. Using dedicated applications (with the above API) allows the display of social network diagrams. Such diagrams can be centered around a specific user, and the first circle of contacts. Additionally, mutual connections between people from this first circle are displayed, illustrating the contacts in common with the primary user.

Linkedin is a business oriented social networking site, mainly used for professional networking. More than 12 million users were registered, spanning 150 industries and more than 400 economic regions (as classified by the service). It can then be used to find jobs, people and business opportunities recommended by anyone in a contact network. The "gated-access approach" (where contact with any professional requires either a pre-existing relationship or the intervention of a common contact) is intended to build trust among the service's users.

MOSS is an enterprise social networking application taking form of a free add-on. Organizations install these applications on their own servers and enable employees to share their contacts networks and relationships to outside people and companies.

The current state of art allows people to share their contact networks, however they do not give any information about the relationships between people such as robustness and/or accountability. All contacts are treated the same, despite the fact that users have very specific and quantifiable relationships. As social networks often encourage users to collect more and more friends/contacts/links, their utility as intermediate contacts becomes less and less valuable.

The purpose of the invention is to resolve the problems of the prior art by proposing, in particular, a process for establishing a social network between users, wherein information qualifying the relationship between users is displayed. Such information could be used to define the optimal path to communicate between two users with common contacts.

For that purpose and according to a first aspect, the invention relates to a process for establishing a social network between users, wherein nodes represent users and ties linking said nodes representing relationships between said users, characterised in that information are associated to at least one tie in order to qualify the relationship between users represented by nodes linked by said tie.

According to a second aspect, the invention relates to an architecture to establish a social network between users comprising:
- a user terminal able to open a session with a social network server;
- a data base containing nodes, ties and ties information for each pair of nodes, said nodes and ties representing respectively users and their relationships, information being associated to at least one tie in order to qualify the relationship between users represented by nodes linked by said tie.

According to a third aspect, the invention relates to a reasoning server for such architecture to establish a social network, said server comprising means for determining optimal paths between two nodes.

Other aspects and advantages will become apparent in the following description made with reference to the appended figures, in which:
- Figure 1 shows an example of a social network diagram facility;
- Figure 2 illustrates the carrying out of the process according to an embodiment of the invention in the architecture using the reasoning server. In one embodiment of the invention, the process is achieved with an architecture to establish a social network between users, comprising:

- a user terminal 1 able to open a session with a social network server 3; and
- a data base 4 containing nodes, ties and ties information for each pair of nodes, said nodes and ties representing respectively users and their relationships, information being associated to at least one tie in order to qualify the relationship between users represented by nodes linked by said tie.
   Ties and nodes belong to a diagram showing a relationships analysis in a social network wherein nodes represent users and ties linking said nodes represent relationships between said users.

Steps of the process can depend from system's topology implementation. Some process steps can be rearranged considering the direct (or indirect) mutual visibility and accessibility of system functional elements.

The user uses a fixed or mobile terminal 1 PC hosting social network application, such as Personal Digital Assistant (PDA) or mobile phone, allowing connecting to a social network server 3.

The social network server 3 is a functional module offering social network functionalities in a communication network 2.

The user opens a session with the social network server 3 thanks to the communication network. A private or public communication means can be used to connect the user application with the network server application.

The implementation of the communication network 2 is access and core network agnostic. Access network can be, for example, 3G, Wi-Fi, LAN, WiMAX, etc. Core network can be, for example, the IMS core network.

The user retrieves information about his first circle of contacts, as well as details to qualify the relationship in the data base 4 of the architecture.

This information qualifying the relationship can concern its robustness (e.g loose or tight relationship), type (eg. professional, familial, friendship), personal feeling about it (e.g good, distant, neutral), last communication...

When possible, information is collected or inferred from the social network server 3.

This quantitative and/or qualitative information is grouped into an appropriate data model and ties and ties associated information corresponding are updated and displayed to the user GUI to provide the social network diagram.

Such a representation allows associating information to at least one tie in order to qualify the relationship between users represented by nodes linked by said tie, and so, to enhance information associated with the relationship itself.

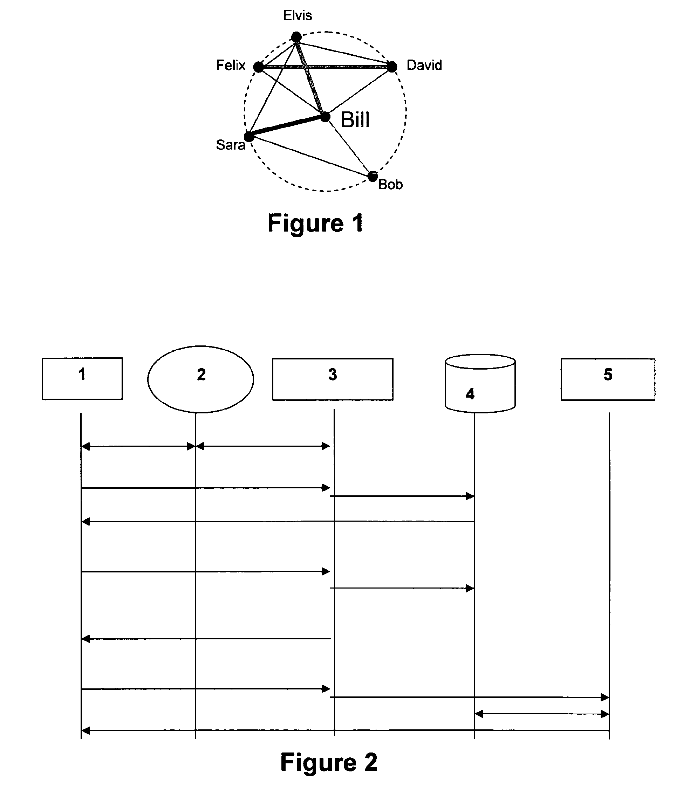

On figure 1, the diagram is centered around one user (i.e. Bill), and his first circle of contacts. Additionally, ties between users of first circle of contacts are displayed, too.

Information being associated to tie between the user and the users of the first circle can graphically be represented the following ways:
- by a color code associated with the personal relationship feeling, ties being more or less dark according it is good or bad;
- by a ties size code associated with relationship robustness, size being directly proportional to robustness. Ties are represented according to at least one associated information.

Each time a new contact is added or information concerning a contact is modified by the user or the social network server 3, nodes and ties enhanced information 5 is updated into GUI application of the user terminal 1.

Enhanced ties information can notably be used as research criteria to find an optimal path between two nodes into a social network diagram.

In an example of advanced reasoning considering the diagram of figure 1, Elvis is searching for a positive way to enter into contact with Bob. Elvis and Bob have two mutual contacts: Bill (the primary user in the figure) and Sara. The distance between Elvis and Bob is two ties, regardless if the intermediary is Sara or Bill. However, figure 1 makes it obvious that Bill has a positive and strong relationship with both Elvis and Bob, while Sara is a casual and frequently encountered acquaintance. Elvis is more likely to enter into a fruitful relationship with Bob by taking advantage of their mutual contact Bill. Any other possible path of the diagram appears as less efficient.

In a further embodiment, the user can delegate the optimal path resolution to a reasoning server 5.

The reasoning server 5 is a functional module of the communication network 2 located either in the user terminal 1 and/or social network server 2. It comprises means for determining the optimal path between two nodes, either directly or through indirect intermediary nodes.

In order to determine such optimal path, the user enters his request expressed as rules. Then the reasoning server 5 applies user's rules.

Means for determining the optimal path uses rules are composed of variable arguments, notably ties information, concatenated by a logical expression (i.e. AND, OR, NOT, etc.)

In one example, a typical rule to find an optimal path could be:
"To reach the goal node, maximize the selection of tight AND good relationship, AND minimize the crossed contact node".

The user of the social network architecture described above, can find optimal path connecting two nodes into a social network either by himself or by using the reasoning server. Quantitative and qualitative information about the effective relationship with contacts, and represented as a diagram for example, enriches the social network as they can be used as criteria for the reasoning step.

Integrating a modern "social networking" function into the user's terminal, either fixed or mobile PC communication client, uses the momentum and continuous growth of social networking sites to attract users. A contact list or address seems to be a logical point of integration.

This optimization of the "gated-access approach" (where contact with any professional requires either a pre-existing relationship, or the intervention of a contact of theirs) is intended to build accurate trust among the service's users.

Additional information helps to focus path resolution using the robustness and quality of inter-node relationships. This is good approach for reaching a key person while optimizing personal effort, time and cost.

## Claims

1. Process for establishing a social network between users, wherein nodes represent users and ties linking said nodes representing relationships between said users, **characterised in that** information are associated to at least one tie in order to qualify the relationship between users represented by nodes linked by said tie.

2. Process according to claim 1, **characterised in that** user retrieves information about his first circle of contacts, such information being associated to tie between the user and the users of the first circle.

3. Process according to claim 1 or 2, **characterised in that** nodes, ties and ties associated information are updated and displayed to the user GUI to provide a social network diagram.

4. Process according to any of claims 1 to 3, **characterised in that** ties are represented according to at least one associated information.

5. Architecture to establish a social network between users comprising:
- a user terminal (1) able to open a session with a social network server (3);
- a data base (4) containing nodes, ties and ties information for each pair of nodes, said nodes and ties representing respectively users and their relationships, information being associated to at least one tie in order to qualify the relationship between users represented by nodes linked by said tie.

6. Reasoning server (5) for an architecture to establish a social network according to claim 5, said server comprising means for determining the optimal path between two nodes.

7. Reasoning server (5) according to claim 6, **characterised in that** means for determining the optimal path use rules composed by tie associated information concatenated by logical expression.
